# FASCICULE DE BREVET EUROPEEN

(11) **EP 0 733 308 B1**
(45) Date de publication et mention de la délivrance du brevet: **04.06.2003**
(21) Numéro de dépôt: 96200377.8
(22) Date de dépôt: 15.02.1996
(51) Int. Cl.: A23G 9/00, A23G 9/08, A23G 9/22, A23G 9/24, A23G 9/02

(54) **Procédé et appareil de fabrication d'articles de confiserie glacée**
Verfahren und Einrichtung zur Herstellung von Gegenständen aus gefrorenen Süsswaren
Process and apparatus for making frozen confectionary articles

(30) Priorité: 22.03.1995 EP 95104198
(43) Date de publication de la demande: 25.09.1996
(73) Titulaire: SOCIETE DES PRODUITS NESTLE S.A., 1800 Vevey (CH)
(72) Inventeur: Daouse, Alian, F-60430 Noailles (FR); Mange, Christian, F-60000-Beauvais (FR)
(74) Mandataire: Archambault, Jean

(56) Documents cités:
- EP-A- 0 582 327
- WO-A-94/07375
- CH-A- 379 249
- GB-A- 187 919
- GB-A- 666 297
- GB-A- 2 263 615
- US-A- 4 397 880
- US-A- 5 147 669
- PATENT ABSTRACTS OF JAPAN vol. 12, no. 82 (C-481), 15 mars 1988 & JP 62 215350 A (NISSHIN NYUGYO), 22 septembre 1987,
- DATABASE WPI Week 9102 Derwent Publications Ltd., London, GB; AN 91-007715 XP002049187 & CN 1 040 938 A (LI CHAOCHENG) , 4 avril 1990

## Description

L'invention concerne un procédé de fabrication d'articles de confiserie glacée moulés par moulage d'une coquille de chocolat et remplissage de l'espace creux par un centre comprenant une composition de crème glacée et le cas échéant une gaufrette, puis talonnage avec un enrobage de chocolat, démoulage et emballage.

On connaît, par exemple de US-A-3529553, un procédé de moulage de coquilles creuses de chocolat dans lequel on coule du chocolat fondu dans des cavités embouties dans une feuille d'aluminium servant de moule refroidi à basse température, on laisse solidifier le chocolat au contact de la surface refroidie du moule, puis on soutire le centre de chocolat encore liquide au moyen de buses tubulaires reliées à un réservoir sous vide, de manière à former une coquille creuse de chocolat à paroi mince. On recycle le chocolat soutiré dans le réservoir de la doseuse à l'aide d'une pompe et d'un tube chauffé pour maintenir la masse de chocolat à l'état liquéfié.

Dans le domaine des articles de confiserie glacée, on utilise également le principe du moule froid, par exemple dans WO 91/13557, pour fabriquer des cônes glacés en moulant une couche de chocolat à l'intérieur d'un cône en gaufrette. Pour ce faire, on coule une masse de chocolat liquide à l'intérieur d'un cône en gaufrette, puis on répartit la masse en couche mince à la surface intérieure du cône en introduisant un contre-moule conique froid dans la gaufrette.

GB-A-187 919, concerne une barre glacée enrobée de chocolat et un procédé de fabrication qui consiste à verser un mix liquide dans des moules et à congeler le mix, puis à le démouler et enfin à l'enrober par trempage dans un chocolat liquide. La barre glacée peut contenir un biscuit, qui peut également être enrobé de chocolat pour ne pas devenir détrempé au contact de la crème glacée.

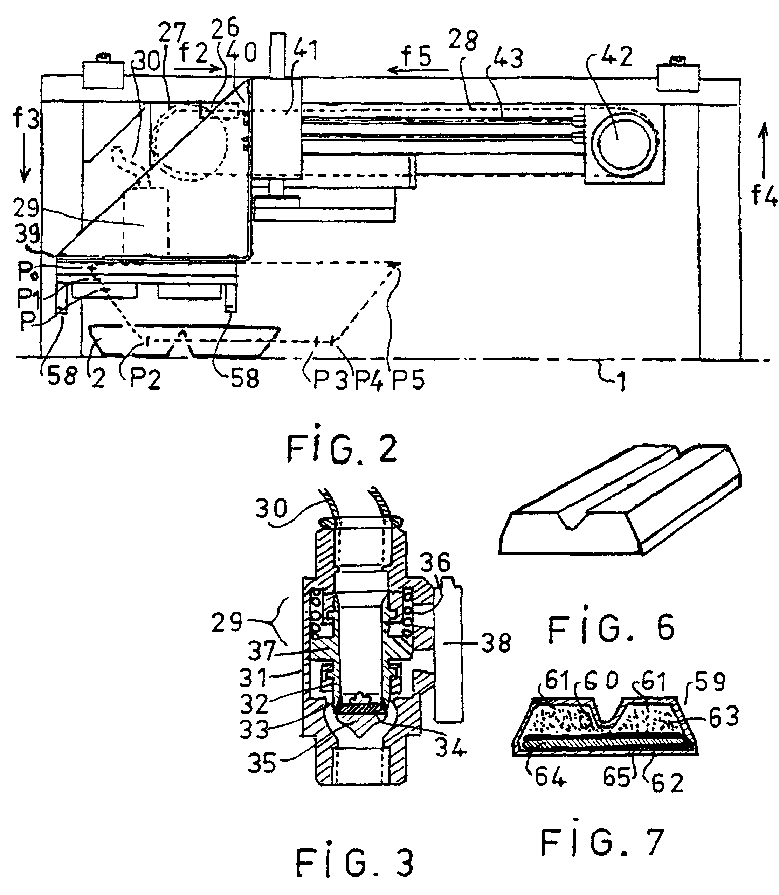

GB-A-2 263 615, concerne une barre glacée recouverte de chocolat qui peut être fabriquée par moulage d'une coque de chocolat, remplissage de crème glacée assemblage avec un biscuit et talonnage ou par enrobage d'un noyau de crème glacée extrudé et coupé en barre et assemblage avec un biscuit préalablement enrobé. Dans la version moulée, représentée à la figure 2, l'article est fabriqué comme illustré à la figure 5 par formation d'une coquille de chocolat dans un moule ouvert de forme générale parallélépipédique à base à angles arrondis, dépose de deux bandes de caramel , remplissage d'une masse de crème glacée avec inclusions de morceaux de noisette jusqu'à un niveau proche du bord du moule, puis assemblage par dépose d'une gaufrette recouverte de chocolat sur la face inférieure uniquement, formation d'un talon par coulage de chocolat, refroidissement et démoulage.

WO-A-94 07375, se rapporte à un procédé de moulage d'une coque de chocolat par remplissage d'un moule refroidi à 0° C ou à température négative, de chocolat liquide, solidification d'une couche de chocolat au voisinage de la paroi du moule et retournement du moule pour former une coque. La coque peut être remplie avec une garniture à température négative, un talon de chocolat peut être appliqué et l'article démoulé.

Le but de l'invention est la fabrication à grande cadence d'articles de confiserie glacée moulés comprenant une coquille creuse en chocolat à paroi mince, la coquille étant suffisamment rigide pour ne pas s'écrouler lors de sa formation ou s'endommager au démoulage, et qui puissent être facilement démoulés.

A cet effet, le procédé selon l'invention est caractérisé par le fait que l'on forme la coquille par coulage de chocolat, à température supérieure à 35° C dans les alvéoles de moules rigides en alliage d'aluminium, fabriqués par moulage à la cire perdue, refroidis à température inférieure ou égale à -10° C, dans un environnement d'humidité relative inférieure à 60 %, de manière que le chocolat remplisse entièrement les alvéoles et se solidifie en surface au contact de la paroi froide du moule, puis que l'on soutire le centre encore liquide par aspiration sous vide.

Selon l'invention, on remplit entièrement les alvéoles des moules avec du chocolat liquide à partir de buses pilotées délivrant par doses successives juste la quantité volumétrique représentant le volume d'une alvéole dans les alvéoles des moules défilant de préférence en continu sur un transporteur. On dose le chocolat à une température supérieure à la température de tempérage, de préférence à environ 50° C, à laquelle le chocolat a le seuil d'écoulement minimum.

Les moules sont fabriqués en fonderie en alliage d'aluminium par moulage à la cire perdue. Ils ont une épaisseur suffisante pour assurer une bonne rigidité, > à 1 mm, de préférence 1 à 3 mm, par exemple environ 2,5 mm. Le matériau et son épaisseur donnent un excellent transfert thermique entre le fluide de refroidissement des moules et le produit à mouler et permet un bon démoulage.

La méthode de fonderie à la cire perdue confère à la surface une certaine porosité ou rugosité de surface sans qu'elle ne présente de cavités affleurantes ni de criques. De préférence, la rugosité de surface est exprimée par la valeur RA, représentant la valeur moyenne de la hauteur de crête des protubérences en micron. Les conditions du procédé de fonderie à la cire perdue donnent la rugosité de surface dictée par la configuration de la surface de la cire et du premier bain d'enrobage. La RA est de préférence 1,6 à 3,2 micron, pour un bon démoulage.

Cet état de surface semble favoriser le rétreint du chocolat et ainsi faciliter le démoulage.

De plus, les caractéristiques thermiques d'une part du matériau du moule, qui est un bon conducteur et d'autre part du chocolat, qui est un inerte thermique, sont très éloignées, ce qui permet le moulage de la coquille dans de bonnes conditions, puisque la surface se rigidifie rapidement cependant que le centre de la masse de chocolat demeure suffisamment liquide pour pouvoir être aspirée.

L'air ambiant a une humidité relative inférieure à 60 %, et de préférence égale ou même inférieure à 10 %. On a constaté que plus l'humidité relative était élevée, par exemple autour de 60 %, plus basse devait être la température des moules au moment du démoulage, autour de -30° C. Par contre, une humidité relative autour de 10 % et moins ne nécessitait qu'une température de moule d'environ -10° C pour obtenir les mêmes caractéristiques de démoulage. Une humidité relative la plus basse possible est préférée, également par ce qu'elle évite dans une large mesure le givrage de la surface des moules, lequel givrage empêcherait le démoulage.

On a constaté par ailleurs que la température des moules ne devait pas être trop basse lors de la fabrication de la coquille, de manière que le choc thermique infligé au chocolat ne soit pas trop brutal, ce qui conduirait à un risque d'affaissement des parois minces de la coquille. On préfère en pratique que les moules soient à environ -10° C à -25° C.

Par ces mesures, on obtient une épaisseur de chocolat de la coquille de 0,5 à 3 mm environ ainsi qu'une bonne tenue de celle-ci.

Dans le contexte de l'invention, le terme de "chocolat" ne se limite pas au chocolat proprement dit, mais s'étend aux compositions grasses utilisées couramment en confiserie chocolaterie, comprenant des graisses végétales en susbstitution du beurre de cacao telles que par exemple les couvertures ou "compounds". Le chocolat en question contient avantageusement moins de 50 % et de préférence environ 40 % en poids de matière grasse.

L'invention concerne également un article de confiserie glacée, caractérisé par le fait qu'il comprend:
une coque de chocolat ou de couverture grasse, moulée,
à l'intérieur de ladite coque, une masse de composition glacée et
un biscuit, que ledit biscuit est protégé contre la pénétration d'humidité par une couche d'enrobage, qu'il se présente sous la forme d'un lingot à angles vifs, que la coque de chocolat ou de couverture grasse comprend une alvéole et un talon formant l'alvéole.

De préférence, le biscuit est une gaufrette, par exemple constitué d'une feuille de biscuit mince et friable enroulé. La gaufrette est protégée de l'humidité par un enrobage de composition grasse, notamment de chocolat ou de couverture grasse, de sorte qu'elle puisse être en contact avec la composition glacée sans risquer de pomper de son humidité et de ramollir.

L'article est une barre glacée moulée se présentant sous la forme d'un lingot à angles vifs. La coque de chocolat ou de couverture grasse comprend une alvéole et un talon fermant l'alvéole. La coque a une épaisseur de 0,5 à 3 mm et de préférence de 1,5 à 2,5 mm. La crème glacée représente, en volume, environ 50 %, cependant que la coque et le talon représentent, en volume, environ 33 %, le reste étant constitué du biscuit enrobé. Le biscuit enrobé est disposé longitudinalement entre la masse de composition glacée et le talon, soit pratiquement sur toute la longueur et sur toute la largeur de l'alvéole.

Dans une réalisation particulière, la coque constitue une alvéole à double compartiment.

L'invention concerne également un appareil pour la mise en oeuvre du procédé de l'invention, comprenant:
une chaîne de transport sans fin de plaques de moules comportant des alvéoles, au dessus de ladite chaîne, successivement;
une doseuse de chocolat remplissant à ras bord les alvéoles de chocolat liquide,
un poste d'aspiration des centres encore liquides produisant des coquilles de chocolat à parois minces,
un poste de remplissage des coquilles de composition glacée,
le cas échéant, un poste de dépose d'une gaufrette,
traversé par la dite chaîne, un tunnel de refroidissement, dans lequel cheminent les moules remplis sur le brin d'aller et les moules vides sur le brin de retour de la chaîne puis,
un poste de retournement des moules et de démoulage,
un poste de talonnage et
un poste d'enveloppement des articles.

L'invention concerne également un dispositif d'aspiration de chocolat liquide coulé dans les alvéoles de plaques de moules associé à une chaîne de transport sans fin comportant:
un chariot guidé pouvant être animé d'un mouvement horizontal de va et vient,
une vanne d'aspiration reliée par un tuyau souple à un réservoir de chocolat lui-même relié au vide,
un dispositif de monte et baisse supporté par le chariot et portant la vanne,
un embout prolongeant la vanne, de forme complémentaire de celle des alvéoles d'une plaque de moules et thermostaté et
un guide de maintien des plaques de moule en position d'entraînement par la chaîne.

Le dispositif d'aspiration est piloté pas à pas ou, de préférence en accompagnement de la chaîne de transport sans fin.

Dans cette forme préférée, celui-ci descend tout en avançant dans le sens de cheminement de la chaîne grâce à l'action combinée du mouvement horizontal de progression du chariot et du mouvement de descente du monte et baisse. La vitesse de descente est ajustable. L'aspiration a lieu en même temps que la descente et débute de préférence au commencement de la descente. Elle continue pendant la majeure partie de la durée du mouvement d'accompagnement de la chaîne et cesse juste avant la remontée du monte et baisse. Cette remontée a lieu en accompagnement pour dégager l'outil du moule. Ceci facilite le maintien du vide.

S'en suit le retour du chariot à sa position de départ. La vitesse de retour est très rapide, par exemple environ quatre fois plus rapide que la vitesse d'accompagnement.

On peut obtenir le mouvement de monte et baisse par vérin et le mouvement d'accompagnement par servo moteur ou de préférence par cames, par exemple au moyen d'un galet solidaire de la vanne roulant sur une came fixe.

On a intérêt à ce qu'il y ait peu de tolérance entre l'embout du dispositif aspirateur et la plaque de moule.

Le dispositif comporte également un élément de maintien des plaques de moules en position d'entrainement par la chaîne et donc contre les maillons de cette chaîne pendant la phase d'aspiration. Ce peut être par l'intermédiaire d'une double chaîne de maintien des moules en position par rapport à la buse d'aspiration. En variante, des jambes ou rails peuvent maintenir les plaques de moules contre la chaîne de transport.

Les dessins annexés illustrent schématiquement et à titre d'exemple un mode particulier de réalisation de l'appareil et du dispositif selon l'invention.

Dans les dessins,
la figure 1 est une vue schématique d'ensemble de l'appareil,
la figure 2 est une vue schématique de côté du dispositif d'aspiration et
les figures 3 à 5 sont des vues détaillées, respectivement en coupe longitudinale partielle de la vanne d'aspiration, en coupe longitudinale et en vue de dessous partielle de l'embout du dispositif d'aspiration et
les figures 6 et 7 sont, respectivement une vue en perspective et une vue en coupe d'un article de confiserie glacée.

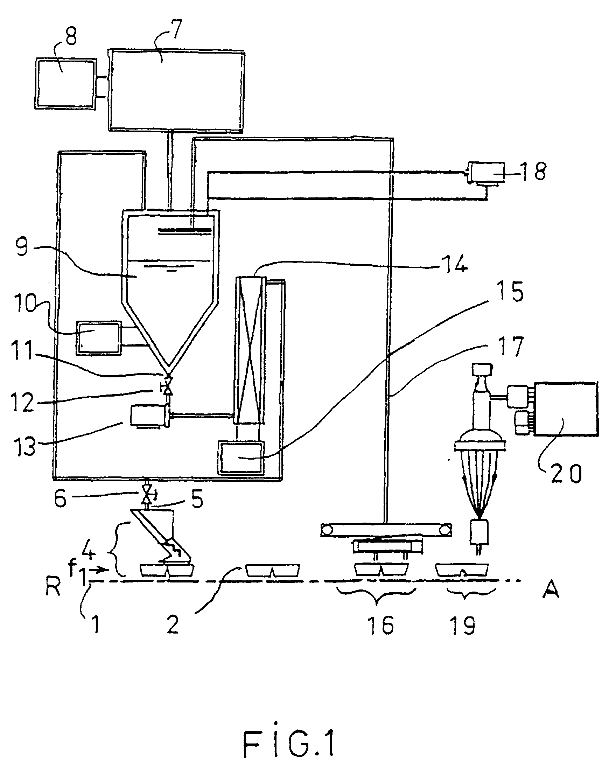

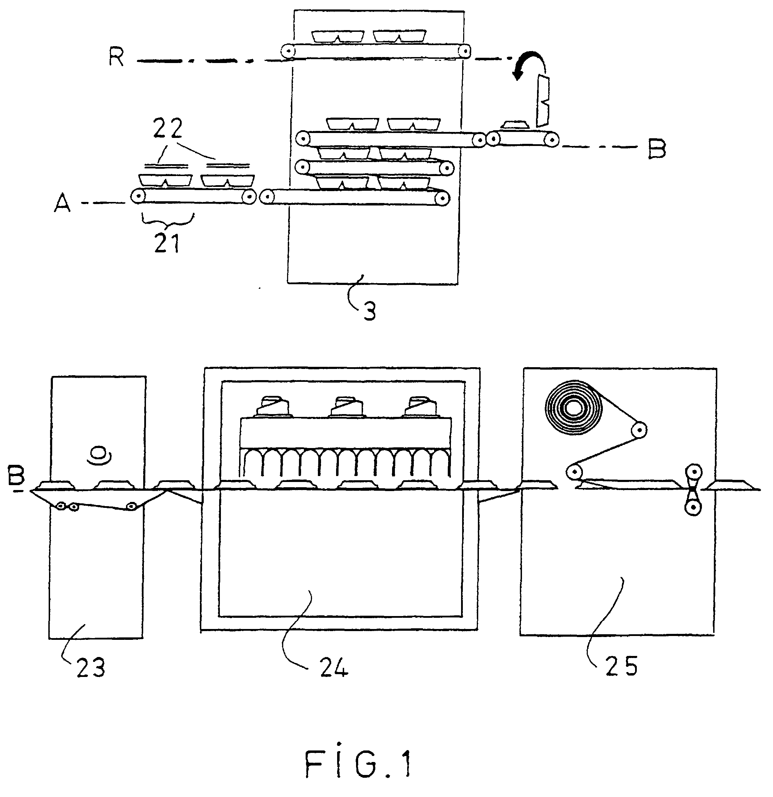

A la figure 1, la chaîne transporteuse sans fin 1, animée d'un mouvement de translation continue selon la flèche f1, achemine les plaques de moules 2 prérefroidis à environ - 30° C par son brin de retour R, sortant du tunnel de durcissement 3. Les plaques de moules sont entrainées par la chaîne et maintenus en position par des oeillets sur au moins leur bord longitudinal en prise avec des tenons solidaires de la chaîne (non représentés).

On remplit à ras les alvéoles des plaques de moules 2 au moyen d'une doseuse 4 de chocolat liquide. Le chocolat est coulé dans la trémie d'alimentation de la doseuse par un conduit 5 pourvu d'une vanne 6. Le chocolat est déversé depuis le réservoir 7 à double paroi, thermostaté au moyen d'eau chaude à environ 45° C provenant du réservoir 8, vers une cuve tampon 9, à double paroi également thermostatée à l'eau chaude à environ 45° C provenant du réservoir 10. Du réservoir tampon 9, il passe par le conduit 11, muni de la vanne 12, il est repris par la pompe 13 et dirigé vers l'échangeur tubulaire 14, thermostaté à l'eau chaude à environ 50° C provenant du résevoir 15. En variante, l'échangeur de chaleur 14 peut être à plaques.
A partir de la doseuse 4, le chocolat est dosé exactement dans les alvéoles des plaques de moules cheminant en continu, par un système de dosage volumétrique à vis sans fin rotative muni de moyens coupe-gouttes. A ce propos, il est essentiel qu'il n'y ait pas de gouttes sur la surface des plaques de moules en dehors des alvéoles, car il n'est pas prévu de laver ou d'araser les moules vides retournés.

Après remplissage, les plaques de moules cheminent, pendant environ 4 à 4,5 s, ce qui provoque un durcissement du chocolat en surface par refroidissement rapide au contact des plaques de moules froids, puis se présentent sous le dispositif d'aspiration de chocolat 16. Ce dispositif sera décrit plus en détails dans la suite de l'exposé en référence à la figure 2. A l'aide de ce dispositif, le chocolat encore liquide se trouvant au centre des alvéoles est aspiré en accompagnement des plaques de moules et dirigé par le conduit 17 vers la cuve tampon 9, par l'effet du vide produit dans cette cuve par la pompe à vide 18. Ici aussi, il est essentiel que l'aspiration du chocolat ait lieu sans éclaboussures pour la raison indiquée précédemment.

Les plaques de moules dans les alvéoles desquelles on a formé des coquilles à parois minces de chocolat sont ensuite dirigées vers la doseuse 19 de composition glacée. Cette doseuse remplit ces coquilles de composition glacée foisonnée provenant du freezer 20 à partir de chambres de dosage au moyen de vérins de monte et baisse qui délivrent le volume exact de composition glacée remplissant une alvéole (non représentés). Cette dernière doseuse comporte également des moyens coupe-gouttes. Il est essentiel qu'il n'y ait pas de gouttes sur la surface des plaques en dehors des alvéoles. En effet, ces gouttes de crème glacée, une fois durcies empêcheraient le démoulage ultérieur des portions.

Le brin de chaîne A conduit alors les plaques de moules vers un poste 21 de dépose de gaufrettes 22 de biscuit enrobé de chocolat, de manière à constituer une barrière contre la migration d'humidité vers le biscuit au contact de la crème glacée lors de l'entreposage. Les plaques de moules remplis cheminent ensuite dans le tunnel de durcissement 3, maintenu à environ -35° C.

Parvenant sur le brin de chaîne B, au sortir du tunnel 3, les plaques de moules sont prises en charge latéralement par rapport au brin B, puis retournées par un mécanisme non représenté et les portions démoulées, de préférence avec l'aide de marteaux non représentés frappant sur le dos des plaques. Les moules vides retournent vers le tunnel de refroidissement 3, pour être refroidis et recyclés sur le brin R. A partir du brin B, les portions démoulées sont prises en charge et enrobées avec un talon de chocolat dans la talonneuse 23, puis durcies dans le post-refroidisseur 24 et enfin enveloppées dans des sachets souples dans l'ensacheuse en continu 25, puis les sachets sont mis dans des cartons qui sont entreposés en chambre froide.

A la figure 2, le dispositif d'aspiration comprend un chariot 26, mobile en translation horizontale selon un mouvement de va et vient comme expliqué plus en détail ci-après, fixé au bâti du dispositif. Montée sur le chariot 26, une vanne d'alimentation directe 29 est reliée au conduit d'aspiration 17 par un raccord souple 30. Le conduit 17 est relié au vide régnant dans l'espace supérieur de la cuve tampon 9.

Comme représenté à la figure 3, la vanne 29, axiale, est constituée d'un corps cylindrique 31, dans lequel coulisse une chemise cylindrique 32, dont la base en couronne 33 vient s'appuyer de manière étanche sur le joint 34 de siège 35 en forme de tulipe et ainsi fermer la vanne (position telle que représentée à la figure 3) sous la pression du ressort de rappel 36 qui agit sur le piston 37 solidaire de la chemise 32. Une électrovanne 38 constitue l'automatisme pneumatique qui permet d'ouvrir la vanne par fluide comprimé agissant contre le ressort 36, en remontant la chemise 32 en position d'aspiration et de laisser ainsi le passage au chocolat liquide.

La vanne 29 est reliée à l'embout 39. L'ensemble vanne/embout est monté sur un bâti 40, lui-même solidaire de la partie mobile du monte et baisse 41.

Le fonctionnement du dispositif d'aspiration est le suivant, en référence à la figure 2:

Lorsqu'une plaque de moules se présentant sous le dispositif d'aspiration a été détectée par un dispositif détecteur de position non représenté, le chariot 26 est dans sa position extrême arrière.

La trajectoire du point P situé sur l'embout 39 est indiquée sur le diagramme en pointillés. Le point extrême arrière Po correspond au début du cycle. Le chariot 26 avance en direction de la flèche f2 sous l'action du moteur 42 à cycle constant, lequel entraine la courroie crantée sans fin 28 par l'entremise des poulies 27, la courroie 28 étant en prise avec le chariot 26, qui lui glisse sur la glissière fixe 43 par l'intermédiaire de galets non représentés.

Le point P, tout en avançant, descend en même temps selon la flèche f3 sous l'action du vérin de monte et baisse 41. En P1, environ 1/100 ème de seconde plus tard, la vanne 29 s'ouvre, relie l'embout 39 au vide et l'aspiration commence. Le mouvement combiné se poursuit jusqu'en P2 où le monte et baisse 41 est en position basse. Le mouvement horizontal vers l'avant se poursuit alors par déplacement du chariot selon la flèche f2 jusqu'au point P3, la phase d'aspiration durant environ 1,4 s. En P3, la vanne 29 se ferme, ce qui arrête l'aspiration.

Le déplacement horizontal se poursuit pendant environ 1/100 s jusqu'en P4. A ce moment, le vérin remonte progressivement le monte et baisse 41, et le point P se déplace suivant la flèche f4 pendant environ 0,3 s cependant que le chariot continue son avance jusqu'au point avant extrême P5, puis retourne rapidement vers sa position extrême arrière Po en environ 0,6 s suivant la flèche f5. Le dispositif est alors en position d'attente d'une nouvelle plaque.

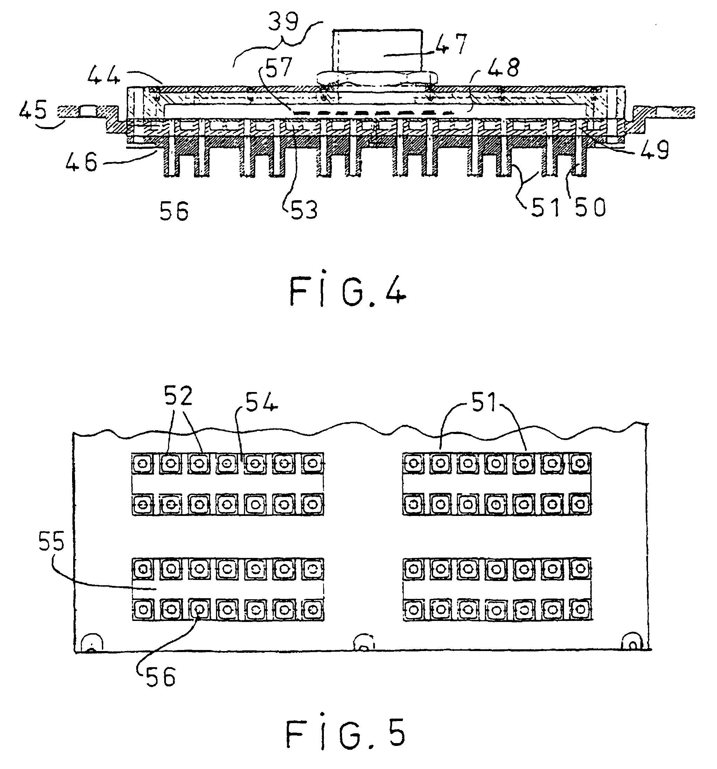

Tel que représenté aux figures 4 et 5, l'embout 39 est thermostaté et comprend trois pièces successives 44, 45 et 46 fixées les unes aux autres.

La pièce 44, en forme de cloche est reliée à la vanne 29 par un orifice central 47 débouchant dans une chambre de répartition 48. La pièce intermédiaire 45 est une plaque percée de part en part d'orifices 49 répartis dans son épaisseur et qui communiquent avec les passages 50 ménagés dans les douilles 51 d'aspiration en forme de caissons 52 de la pièce 46. La pièce intermédiaire 45 est traversée dans sa masse par un circuit 53 dans lequel circule un fluide de trermostatisation, par exemple de l'eau chaude. Le circuit 53 évite que le chocolat ne se fige. La pièce 46 terminale comprend des rangées de douilles 51 dont la disposition correspond à la configuration des alvéoles des moules.

Dans le mode de réalisation préférentiel représenté, les douilles 51 sont séparées les unes des autres par des espaces qui constituent des passages latéraux 54 et longitudinaux 55 pour répartir les flux de liquide, de manière à éviter les problèmes de voûtage qui s'accompagneraient de phénomènes de succion. De plus, pour réaliser une aspiration optimale, les douilles 51 comportent dans la partie terminale de leur caissons 52 des décaissements 56.

Selon une variante préférée de l'embout 39, celui-ci comprend dans la partie centrale de la cloche de la pièce 44 une grille 57 destinée à compenser les flux préférentiels au centre par rapport à la périphérie.

Pendant la phase d'aspiration, les plaques de moules 2 sont maintenues en prise avec la chaîne sans fin 1 par des pattes 58 qui les empêchent de se dégager de la chaîne vers le haut sous l'effet de l'aspiration.

A la figure 6, l'article de confiserie glacée a la forme d'un lingot de section générale trapézoïdale à angles vifs. Comme on le constate sur la figure 7, la coque 59 est constituée d'une alvéole 60 composée de deux compartiments 61 et fermée par un talon 62. La coque est remplie de composition glacée 63 et une gaufrette 64 entourée d'une couche 65 d'enrobage de chocolat est disposée entre la composition glacée 63 et le talon 62, sur pratiquement toute la longueur et toute la largeur de l'alvéole.

## Revendications

1. Procédé de fabrication d'articles de confiserie glacée moulés par moulage d'une coquille de chocolat et remplissage de l'espace creux par un centre comprenant une composition de crème glacée et le cas échéant une gaufrette, puis talonnage avec un enrobage de chocolat, démoulage et emballage, **caractérisé par le fait que** l'on forme la coquille par coulage de chocolat à température supérieure à 35° C dans les alvéoles de moules rigides en alliage d'aluminium fabriqués par moulage à la cire perdue, refroidis à température inférieure ou égale à -10°C, dans un environnement d'humidité relative inférieure à 60%, de manière que le chocolat remplisse entièrement les alvéoles et se solidifie en surface au contact de la paroi froide du moule, puis que l'on soutire le centre encore liquide par aspiration sous vide.

2. Procédé selon la revendication 1, **caractérisé par le fait que** la température des moules est -10° C à -25° C lors de la fabrication de la coquille.

3. Procédé selon la revendication 1, **caractérisé par le fait que** la température du chocolat est environ 50° C.

4. Procédé selon la revendication 1, **caractérisé par le fait que** les moules ont une rugosité de surface de 1,6 à 3,2 micron et une épaisseur de 1 à 3 mm.

5. Appareil pour la mise en oeuvre du procédé de la revendication 1, comprenant:
une chaîne de transport sans fin de plaques de moules comportant des alvéoles,
au dessus de ladite chaîne, successivement,
une doseuse de chocolat remplissant à ras bord les alvéoles de chocolat liquide,
un poste d'aspiration des centres encore liquides produisant des coquilles de chocolat à parois minces,
un poste de remplissage des coquilles de composition glacée,
le cas échéant, un poste de dépose d'une gaufrette,
traversé par la dite chaîne, un tunnel de refroidissement, dans lequel cheminent les moules remplis sur le brin d'aller et les moules vides sur le brin de retour de la chaîne puis,
un poste de retournement des moules et de démoulage,
un poste de talonnage et un poste d'enveloppement des articles.

6. Dispositif d'aspiration de chocolat liquide coulé dans les alvéoles de plaques de moules associé à une chaîne de transport sans fin pour la mise en oeuvre du procédé de la revendication 1, ledit dispositif comportant:
un chariot guidé pouvant être animé d'un mouvement horizontal de va et vient,
une vanne d'aspiration reliée par un tuyau souple à un réservoir de chocolat lui-même relié au vide,
un dispositif de monte et baisse supporté par le chariot et portant la vanne,
un embout prolongeant la vanne, de forme complémentaire de celle des alvéoles d'une plaque de moules et thermostaté et
un guide de maintien des plaques de moule en position d'entraînement par la chaîne.

7. Dispositif selon la revendication 6, **caractérisé par le fait qu'**il est piloté pas à pas ou en accompagnement de la chaîne de transport sans fin.

8. Dispositif selon la revendication 6, accompagnant la chaîne de transport en continu, **caractérisé par le fait qu'**il descend tout en avançant dans le sens de cheminement de la chaîne grâce à l'action combinée du mouvement horizontal de progression du chariot et du mouvement de descente du monte et baisse.

9. Dispositif selon la revendication 7, **caractérisé par le fait qu'**il aspire le chocolat liquide en même temps qu'il descend, que l'aspiration débute au commencement de la descente, qu'elle continue pendant la majeure partie de la durée du mouvement d'accompagnement de la chaîne et qu'elle cesse juste avant la remontée du monte et baisse, cette remontée ayant lieu en accompagnement pour dégager l'outil du moule, et que le chariot retourne très rapidement à sa position de départ.

10. Dispositif selon la revendication 7, **caractérisé par le fait qu'**il comporte également un élément de maintien des plaques de moules en position d'entrainement par la chaîne contre les maillons de cette chaîne pendant la phase d'aspiration.

11. Dispositif selon la revendication 7, **caractérisé par le fait que** l'embout comprend des rangées de douilles séparées les unes des autres de manière à ménager des passages pour le chocolat liquide et à éviter les phénomènes de succion, et qu'il comprend une grille de répartition des flux de chocolat liquide entre le centre et la périphérie.

12. Article de confiserie glacée, **caractérisé par le fait qu'**il comprend:
une coque de chocolat ou de couverture grasse, moulée,
à l'intérieur de ladite coque, une masse de composition glacée et
un biscuit, que ledit biscuit est protégé contre la pénétration d'humidité par une couche d'enrobage, qu'il se présente sous la forme d'un lingot à angles vifs, que la coque de chocolat ou de couverture grasse comprend une alvéole et un talon fermant l'alvéole, que ladite coque a une épaisseur de 0,5 à 3 mm et que le biscuit enrobé est disposé longitudinalement entre la masse de composition glacée et le talon pratiquement sur toute la longeur et sur toute la largeur de l'alvéole.

13. Article selon la revendication 12, dans lequel l'alvéole est à double compartiment.

## Patentansprüche

1. Verfahren zur Herstellung von formgegossenem Eiskonfekt durch Formgießen einer Schokoladeschale und Füllen des Hohlraums mit einem eine Speiseeiszusammensetzung umfassenden Kern und gegebenenfalls einer Waffel, dann Herstellung eines Bodens mit einem Schokoladeüberzug, Entformung und Verpackung, **dadurch gekennzeichnet, daß** man die Schale durch Gießen von Schokolade mit einer Temperatur über 35°C in die Zellen von starren Formen aus Aluminiumlegierung, die im Wachsauschmelzguß hergestellt wurden und die auf eine Temperatur von -10°C oder darunter gekühlt sind, in einer Umgebung mit einer relativen Feuchtigkeit unter 60% so formt, daß die Schokolade die Zellen ganz füllt und an der Oberfläche im Kontakt mit der kalten Wand der Form erstarrt, und daß man dann den noch flüssigen Kern durch Absaugung unter Unterdruck abzieht.

2. Verfahren nach Anspruch 1, **dadurch gekennzeichnet, daß** die Temperatur der Formen bei der Herstellung der Schalen -10°C bis -25°C beträgt.

3. Verfahren nach Anspruch 1, **dadurch gekennzeichnet, daß** die Temperatur der Schokolade etwa 50°C beträgt.

4. Verfahren nach Anspruch 1, **dadurch gekennzeichnet, daß** die Formen eine Oberflächenrauheit von 1,6 bis 3,2 Mikron und eine Dicke von 1 bis 3 mm aufweisen.

5. Vorrichtung zur Durchführung des Verfahrens nach Anspruch 1, umfassend eine Endloskette zum Transport von Formplatten mit Zellen,
über der Kette nacheinander
eine Schokolade-Zudosiereinreichtung, die die Zellen bis zum Rand mit flüssiger Schokolade füllt,
eine Einrichtung zum Absaugen der noch flüssigen Kerne, die Schokoladeschalen mit dünnen Wänden herstellt,
eine Einrichtung zum Füllen der Schalen mit Eiszusammensetzung, ggf. eine Einrichtung zum Einlegen einer Waffel,
einen von der Kette durchquerten Kühltunnel, den die gefüllten Formen auf dem Fördertrumm und die leeren Formen auf dem Leertrum der Kette durchlaufen, und dann
eine Einrichtung zum Wenden der Formen und zum Entformen,
eine Einrichtung zur Herstellung eines Bodens und
eine Vorrichtung zum Verpacken der Artikel.

6. Vorrichtung zum Absaugen von gegossener flüssiger Schokolade in den Zellen von Formplatten, der eine Förderkette zugeordnet ist, zur Durchführung des Verfahrens nach Anspruch 1, umfassend:
einen geführten Wagen, der in eine horizontale Hin- und Herbewegung versetzt werden kann,
ein Saugventil, das durch einen Schlauch mit einem seinerseits mit einem Unterdruck verbundenen Schokoladebehälter verbunden ist,
eine Hebe- und Senkeinrichtung, die von dem Wagen getragen wird und das Ventil trägt,
einen das Ventil verlängernden, thermostatgesteuerten Ansatz mit einer zur Form der Zellen einer Formplatte komplementären Form und
eine Führung, die die Formplatten in der Stellung hält, in der sie durch die Kette mitgenommen werden.

7. Vorrichtung nach Anspruch 6, **dadurch gekennzeichnet, daß** sie schrittweise oder die endlose Transportkette begleitend gesteuert wird.

8. Vorrichtung nach Anspruch 6, die die Transportkette kontinuierlich begleitet, **dadurch gekennzeichnet, daß** sie sich durch kombinierte Wirkung der horizontalen Vorschubbewegung des Wagens und der Abwärtsbewegung der Hebe- und Senkeinrichtung nach unten bewegt und sich gleichzeitig in Richtung der Bewegung der Kette vorbewegt.

9. Vorrichtung nach Anspruch 7, **dadurch gekennzeichnet, daß** sie gleichzeitig mit ihrer Abwärtsbewegung die flüssige Schokolade absaugt, daß die Absaugung bei Beginn der Abwärtsbewegung beginnt, daß sie während des größten Teils der Dauer der die Kette begleitenden Bewegung weiter stattfindet und daß sie kurz vor der Aufwärtsrückbewegung der Hebe- und Senkeinrichtung aufhört, wobei diese Aufwärtsrückbewegung begleitend stattfindet, um das Werkzeug aus der Form auszurücken, und daß der Wagen sehr schnell in seine Ausgangsstellung zurückkehrt.

10. Vorrichtung nach Anspruch 7, **dadurch gekennzeichnet, daß** sie außerdem ein Element aufweist, das die Formplatten in der Stellung, in der sie von der Kette mitgenommen werden, an die Glieder dieser Kette während der Absaugphase angedrückt hält.

11. Vorrichtung nach Anspruch 7, **dadurch gekennzeichnet, daß** der Ansatz Reihen von Buchsen aufweist, die so voneinander getrennt sind, daß Durchgänge für die flüssige Schokolade gebildet werden und Ansaugerscheinungen vermieden werden, und daß er ein Gitter zur Verteilung der Ströme von flüssiger Schokolade zwischen der Mitte und dem Umfang aufweist.

12. Eiskonfekt, **dadurch gekennzeichnet, daß** es eine formgegossene Schale aus Schokolade oder Fettkuvertüre, im Inneren der Schale eine Masse aus Eiszusammensetzung und ein Keks umfaßt, daß das Keks durch eine Umhüllungsschicht gegen das Eindringen von Feuchtigkeit geschützt ist, daß das Eiskonfekt die Form eines scharfkantigen Blocks aufweist, daß die Schale aus Schokolade oder Fettkuvertüre einen Hohlraum und einen den Hohlraum schließenden Boden aufweist, daß die Schale eine Dicke von 0,5 bis 3 mm besitzt und daß das umhüllte Keks in Längsrichtung zwischen der Masse aus Eiszusammensetzung und dem Boden praktisch auf der ganzen Länge und auf der ganzen Breite des Hohlraums angeordnet ist.

13. Eiskonfekt nach Anspruch 12, in dem der Hohlraum zwei Abteile aufweist.

## Claims

1. Method for manufacturing moulded frozen confectionery articles by moulding a chocolate shell and filling the hollow space with a centre comprising an ice cream composition and, optionally, a wafer, then closing with a chocolate coating, removing from the mould and packaging, **characterised in that** the shell is formed by pouring chocolate, at a temperature above 35°C, into the cells of rigid aluminium alloy moulds manufactured by lost-wax casting, cooled to a temperature below or equal to -10°C, in an environment with a relative humidity below 60%, so that the chocolate completely fills the cells and solidifies on the surface in contact with the cold wall of the mould, and the still-liquid centre is then extracted by suction under vacuum.

2. Method according to Claim 1, **characterised in that** the temperature of the moulds is -10°C to -25°C during the manufacture of the shell.

3. Method according to Claim 1, **characterised in that** the temperature of the chocolate is approximately 50°C.

4. Method according to Claim 1, **characterised in that** the moulds have a surface roughness of 1.6 to 3.2 microns and a thickness of 1 to 3 mm.

5. Apparatus for implementing the method of claim 1, comprising an endless chain for conveying mould plates having cells on top of the said chain, and in succession,
a chocolate metering device filling the cells with liquid chocolate to the brim,
a station for sucking out the still-liquid centres producing chocolate shells with thin walls,
a station for filling the shells with a frozen composition,
optionally, a station for depositing a wafer,
a cooling tunnel, traversed by.the said chain, in which the filled moulds travel on the outward run and the empty moulds travel on the return run of the chain, and then
a station for turning over and emptying the moulds,
a station for applying a closing coat, and
a station for wrapping the articles.

6. Device for sucking out liquid chocolate poured into the cells of mould plates associated with an endless conveyor chain for implementing the method of claim 1, the said device comprising:
a guided carriage which can be given a horizontal reciprocating movement,
a suction valve connected by a flexible tube to a chocolate reservoir that is itself connected to a vacuum,
a raising and lowering device supported by the carriage and carrying the valve,
an end piece extending the valve, with a shape. complementary to that of the cells of a mould plate and which is thermostatically controlled, and
a guide for holding the mould plates in the position of being driven by the chain.

7. Device according to Claim 6, **characterised in that** it is guided step-by-step or accompanying the endless conveyor chain.

8. Device according to Claim 6, continuously accompanying the conveyor chain, **characterised in that** it descends whilst moving forward in the direction of travel of the chain by virtue of the combined action of the horizontal forward movement of the carriage and the downward movement of the raising and lowering device.

9. Device according to Claim 7, **characterised in that** it sucks out the liquid chocolate at the same time as it descends, suction starts at the commencement of the descent, continues during the major part of the duration of the movement accompanying the chain and stops just before the upward movement of the raising and lowering device, this upward movement taking place in accompaniment in order to release the tool from the mould, and the carriage returns very rapidly to its initial position.

10. Device according to Claim 7, **characterised in that** it also includes a component for holding the mould plates in the position of being driven by the chain against the links of this chain during the suction phase.

11. Device according to Claim 7, **characterised in that** the end piece comprises rows of outlets separated from each other so as to provide passages for the liquid chocolate and to prevent suction phenomena, and includes a grid for distributing the flows of liquid chocolate between the centre and the periphery.

12. Article of frozen confectionery, **characterized in that** it comprises: a moulded chocolate shell or fatty covering, a mass of frozen composition within the said shell, and a biscuit, **in that** the said biscuit is protected against the penetration of moisture by a coating layer, **in that** it is in the form of an ingot with sharp edges, **in that** the chocolate shell or fatty covering comprises a cell, and a coating closing the cell, **in that** the said shell has a thickness of 0.5 to 3 mm, and **in that** the coated biscuit is disposed longitudinally between the mass of frozen composition and the closing coat practically over all the length and over all the width of the cell.

13. Article according to claim 12, wherein the cell has a double compartment.
